# EUROPEAN PATENT SPECIFICATION

(11) **EP 1 380 184 B1**
(45) Date of publication and mention of the grant of the patent: **24.01.2007**
(21) Application number: 01927888.6
(22) Date of filing: 06.04.2001
(51) Int. Cl.: H04Q 7/38

(54) **LOCATION METHOD AND SYSTEM**
POSITIONSBESTIMMUNGSVERFAHREN UND -SYSTEM
SYSTEME ET PROCEDE DE LOCALISATION

(43) Date of publication of application: 14.01.2004
(73) Proprietor: Nokia Corporation, 02150 Espoo (FI)
(72) Inventor: WECKSTRÖM, Mikko, FIN-00400 Helsinki (FI); RUUTU, Ville, FIN-02210 Espoo (FI)
(74) Representative: Eisenführ, Speiser & Partner
(86) International application number: PCT/EP2001/003978
(87) International publication number: WO 2002/085057

(56) References cited:
- EP-A- 0 930 514
- WO-A-00/50918
- WO-A-01/10163
- US-B1- 6 198 935

## Description

The present invention relates to a location method and system for locating a wireless terminal device in a cellular network.

### BACKGROUND

Location systems utilize one or more positioning mechanisms in order to determine the location of a terminal device, such as a mobile station, a user equipment or any other kind of radio terminal. Positioning a target terminal device involves signal measurements and a location estimate computation based on the measured signals. In general, a location or position estimate provides the geographic location of a mobile station and/or a valid mobile equipment, expressed in latitude and longitude data. The location estimate can be represented in a predetermined universal format.

Positioning mechanisms for location systems in a GSM (Global System for Mobile communication) cellular system may be based on an uplink time of arrival (TOA) mechanism, an Enhanced Observed Time Difference (E-OTD) mechanism, a Global Positioning System (GPS) assisted mechanism, or any combination thereof. As a fall-back procedure, a Timing Advance (TA) parameter can be used to assist all above positioning mechanisms. The TA value is usually known for the serving base transceiver station (BTS) to obtain TA values in case the concerned mobile station is in an idle mode. A special call not noticed by the user or subscriber of the mobile station is set up, and the cell identity (Cl) of the serving cell and the TA is returned in response to this call.

In GSM, according to the uplink TOA positioning method, the time of arrival (TOA) of a known signal sent from the mobile station and received at three or more measuring units is measured. The known signal is an access burst generated by having the mobile perform an asynchronous handover. The method requires an additional measurement unit hardware, i.e. a location measurement unit (LMU), in the network at the geographical vicinity of the mobile station to be positioned to accurately measure the TOA of the bursts. Since the geographical coordinates of the measurement units are known, the mobile position can be calculated at a central location center via hyperbolic triangulation. This method works with existing mobile stations without any modification.

Furthermore, the E-OTD method is based on measurements in the mobile station of the enhanced observed time difference of arrival of bursts of nearby pairs of BTSs. To obtain an accurate triangulation, E-OTD measurements are needed for at least three distinct pairs of geographically dispersed BTSs. Based on the measured E-OTD values, the location of the mobile station can be calculated either in the network or in the mobile station itself, if all the needed information is available in the mobile station.

The GPS method refers to any of several variants that make use of GPS signals or additional signals derived from the GPS signals in order to calculate the position of the mobile station.

The location system is logically implemented in a cellular network through the addition of a network node, the Mobile Location Center (MLC). In particular, a Gateway Mobile Location Center (GMLC) is provided, which is the first node which an external client accesses in the cellular network. The GMLC requests routing information from the Home Location Register (HLR), performs registration authorization and sends positioning request to and receives final location estimates from the network. Furthermore, a Serving Mobile Location Center (SMLC) is provided which manages the overall coordination and scheduling of resources required to perform positioning or location of a mobile or wireless terminal device. It also calculates the final location estimate and accuracy. In one cellular network, there may be more than one SMLC and GMLC.

A so-called NSS based SMLC supports positioning of a target mobile station via signaling to the visited Mobile Switching Center (MSC). A BSS based SMLC supports positioning via signaling to the Base Station Controller (BSC) serving the target mobile station. Both types of SMLC may support an interface to enable access to information owned by another SMLC.

The SMLC controls a number of LMUs for the purpose of obtaining radio interface measurements to locate or help locate mobile station subscribers in the area that it serves. The signaling between an NSS based SMLC and an LMU is transferred via the MSC serving the LMU, while the signaling between a BSS based SMLC and an LMU is transferred via the BSC that serves or controls the LMU.

The SMLC and GMLC functionality may be combined in the same physical node, combined in existing physical nodes, or reside in different nodes of the cellular network.

A more detailed description of the known location systems is disclosed in the GSM specification 03.71.

However, the standardized TOA method has several problems. For a proper operation of the TOA mechanism, at least three LMUs need to receive a signal from the target mobile station. When the target mobile station is located indoors, this might not be the case. This problem may be solved by increasing the density of LMUs. For example, in a large shopping mall, several LMUs could be arranged indoors or around the building. The drawback of this solution is that an LMU is a receiver which typically needs to receive the signal from the target mobile station, perform necessary RF filtering, frequency down conversions, A/D samplings, and impulse response calculations before the TOA can be estimated. Then, the LMU transfers the TOA measurement result to the network (i.e. a concerned SMLC). Hence, the costs of an LMU are considerable, such that an increased density leads to increased network investments. Furthermore, the standardized TOA procedure is rather complex and requires a lot of signaling traffic, since each LMU needs to receive a measurement command and respond with a measurement result. Moreover, the capacity of the TOA method is limited, since several LMUs need to measure one target mobile station. Another problem resides in the fact that the LMU clocks need to be synchronized with each other so that the TOA measurement values can be compared.

Additionally, the E-OTD method might not give enough accuracy for indoor solutions, and the GPS method does not provide the coverage at indoor environments. The CI only provides the coverage of the cell and is thus not accurate enough in distribution network systems.

### SUMMARY OF THE INVENTION

It is therefore an object of the present invention to provide a location method and system by means of which an accurate location or position estimate of a mobile terminal can be provided even in indoor environments at reduced costs. This object is achieved by a method for locating a wireless terminal device in a cellular network, said method comprising the steps of:
providing at least two spatially diverse local measurement units arranged at a local determination unit and adapted to receive a signal from the wireless terminal device;
processing measurement signals received from the at least two local measurement units at said local determination unit to obtain a location information of the wireless terminal device; and
transmitting the location information to a terminal location center of the cellular network in response to a location request received from the location center.

Furthermore, the above object is achieved by a system for locating a wireless terminal device in a cellular network, the system comprising:
at least two spatially diverse local measurement units for receiving a signal from the wireless terminal device;
a local determination unit for receiving measurement signals from the local measurement units and for processing the received measurement signals to obtain a location information of the wireless terminal device; and
a location center for receiving the location information from the local determination unit in response to a location request transmitted by the location center and for providing a location estimate of the wireless terminal to the cellular network.

Furthermore, the above object is achieved by a network device for determining a location information of a wireless terminal device, the network device comprising:
receiving means for receiving measuring signals from at least two spatially diverse measurement units arranged at the network device and adapted to receive a signal from the wireless terminal device;
determination means for processing the received measuring signals to generate a location information of the wireless terminal device; and
signaling means for providing the location information to a location center of a cellular network in response to a location request received from the location center.

In addition thereto, the above object is achieved by a network device for providing a location estimate of a wireless terminal device to a cellular network, wherein the network device is arranged to determine a local determination unit, to transmit a location request to the determined local determination unit, when a request for locating the wireless terminal device has been received from the cellular network, and to provide a location estimate of the wireless terminal to the cellular network based on a location information received from the local determination unit in response to the location request.

Further, the above object is achieved by a measuring unit for an indoor location system of a cellular network, the measuring unit comprising:
receiving means for receiving a signal transmitted from a wireless terminal device via at least two antenna means arranged at a predetermined distance from each other;
measuring means for measuring phase and/or strength values of signals obtained from the two antenna means; and
processing means for evaluating the qualtity of the measured phase and/or strength values of the received signals and for providing the measured phase and/or strength values to a local location determination unit based on the evaluated quality.

Accordingly, a local TOA location system is provided where direct signals from spatially separated or diverse measuring units are used to locally obtain a location information based on which the position estimate can be obtained in one location measurement unit of the cellular network. Thus, any access method can be used for accessing the location information from the local determination unit. This concept is especially suited for indoor use, since neither a GPS clock nor any accurate clock reference is required for synchronization with other location measurement units. Only one local determination unit or LMU is required to calculate and provide the location information. Since the location information is directly obtained, the extra processing phase at the SMLC is not required. Thereby, the signaling load in the cellular network can be reduced and the capacity of the location system enhanced.

The processing step may include a correlation step for obtaining a time difference of arrival (TDOA) of the measurement signals. In this case, a TDOA information is provided to the cellular network, based on which the SMLC or another location center may calculate the position estimate. As an alternative, the position or location estimate may be directly calculated in the local determination unit, such that the SMLC merely needs to check the plausibility of the received location estimate.

Furthermore, a step may be provided of determining the location determination unit at the location center based on a cell identity obtained from a perform location request message received from the cellular network. In particular, the perform location request message may be a BSSMAP-LE Perform Location Request message.

Preferably, an information about available local determination units may be stored at the location center, e.g. at a corresponding database. Thereby, available local determination units can be determined by accessing the stored information.

An information of a channel used by the wireless terminal device may be requested from a network element, such as a serving base station controller in GSM and RNC (Radio Network Controller) in UTRAN (Universal Mobile Telecommunications System Terrestrial Radio Access Network). This information can be used to adjust the receiving means of the local measurement units.

The location request received from the location center may be a TDOA request message, by means of which the location center requests TDOA information from the local determination unit. The location request may be transmitted to a plurality of local determination units. This may be the case, if a plurality of local determination units are available within or at the current cell of the wireless terminal device.

The at least two local measurement units may be antenna means or measuring units, such as indoor measuring units for performing phase and/or strength measurements of the signal received from the wireless terminal device. Thus, the comparison of signals received at spatially diverse locations can be performed directly at the local determination unit or measurement unit themselves.

The determination means of the network device for determining the location information may comprise a correlating means and a location calculator for calculating a position or location estimate of the wireless terminal device. The correlation means may be arranged to correlate the received measuring signals to obtain TDOA values. Furthermore, the location calculator may be arranged to average the TDOA values. Additionally, a controller means may be provided for receiving a channel information contained in the received location request and for adjusting the receiving means based on the channel information. The network device may be a local measurement unit connected to a base transceiver station of the cellular network. In this case, the antenna means may be the base transceiver station antennas.

Furthermore, the network device may be a serving indoor location calculator arranged to perform a position calculation based on phase and/or strength measurement signals received from at least two indoor measuring units and based on a location information indicating the location of the at least two indoor measuring units inside a building. The serving indoor locating calculator may be arranged to synchronize the at least two indoor measuring units via a data connection, e.g. a Local Area Network (LAN), a Wide Area Network (WAN) or a Wireless Local Area Network (WLAN). The position calculation may comprise a channel, time slot and cell identity calculation.

The predetermined distance between the two antenna means of the measuring unit for the indoor location system may correspond to approximately half the wavelength of the received signal. The measuring means may comprise first measuring means for obtaining an RSSI value and second measuring means for obtaining an angle of arrival (AOA) information. Furthermore, the measuring units may be arranged to transmit a status and/or version information to the local location determination unit in response to a corresponding request.

Additionally, a de-spreading sequence may be downloaded from the cellular network to the measuring unit. Thereby, the measuring unit can be adapted to receive a Wideband Code Division Multiple Access (WCDMA) signal from a 3rd generation mobile network.

The processing means of the measuring unit may be arranged to send data to the local location determination unit via a data connection.

Furthermore, the measuring means of the measuring unit may be arranged to perform the measurement several times within one time slot of the received signal. Thereby, an averaging or discrimination of the phase and/or strength values can be implemented.

### BRIEF DESCRIPTION OF THE DRAWINGS

In the following, the present invention will be described in greater detail on the basis of preferred embodiments with reference to the accompanying drawings, in which:
Fig. 1 shows a schematic block diagram of a local location measurement unit according to a first preferred embodiment;
Fig. 2 shows an implementation example of the local location measurement unit according to the first preferred embodiment with four spatially diverse antennas;
Fig. 3 shows a signaling diagram of a location method according to the first preferred embodiment;
Fig. 4 shows an implementation example of an indoor location system according to the second preferred embodiment; and
Fig. 5 shows a schematic diagram of an indoor measuring unit according to the second preferred embodiment.

### DESCRIPTION OF THE PREFERRED EMBODIMENTS

The preferred embodiments of the present invention will now be described in greater detail on the basis of a local TDOA location system and an indoor location system based on a signal strength and phase measurement.

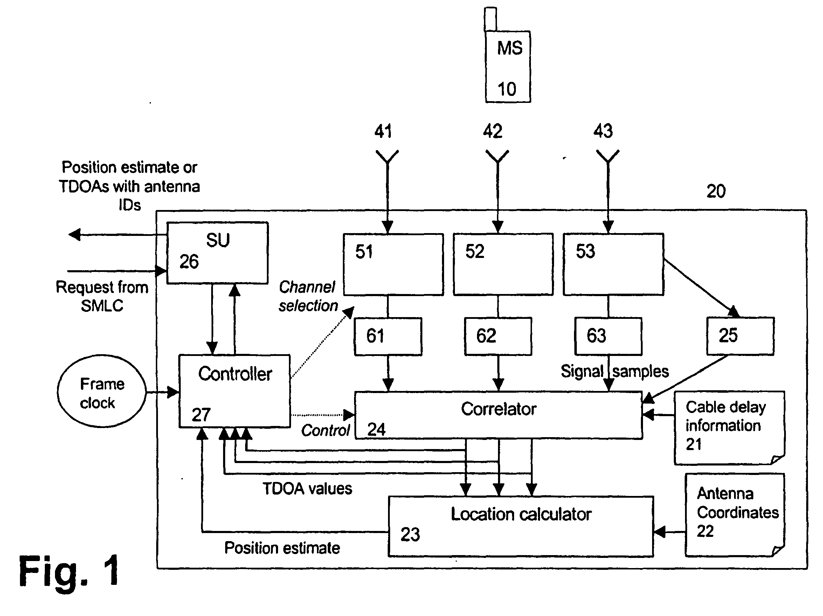

Fig. 1 shows a schematic block diagram of a local location measurement unit 20 provided with three spatially separated antennas 41 to 43 for receiving a radio signal from a target mobile station 10 for which a location estimate is requested. To achieve this, a signaling unit 26 for providing the required signaling according to a signaling protocol of the cellular network receives a local TDOA request message which contains a description of the channel used by the target mobile station 10. This request message is forwarded to a controller 27 provided for controlling the processing in the location measurement unit 20 based on a frame clock received from the cellular network, e.g. from a BTS to which the location measurement unit is connected or associated. The controller 27 decides on the performing of measurements. Based on the received frame clock, the controller 27 knows the timing (frames, time slots) of the BTS transmissions and receptions. The controller adjusts the frequency or channel selection in respective analog reception parts 51 to 53 according to a channel description obtained from the signaling unit 26. This channel description may be derived from the received request message. Using the time slot information in the channel description of the request message and the frame clock, the controller 27 instructs a correlator 24 to select certain time slots, i.e. certain transmission signals of the target mobile station 10.

As indicated in Fig. 1, the location measurement unit 20 comprises at least three spatially diverse antennas 41 to 43 which can be located at predetermined positions of a coverage area, e.g. at the corners of a shopping mall or the like.

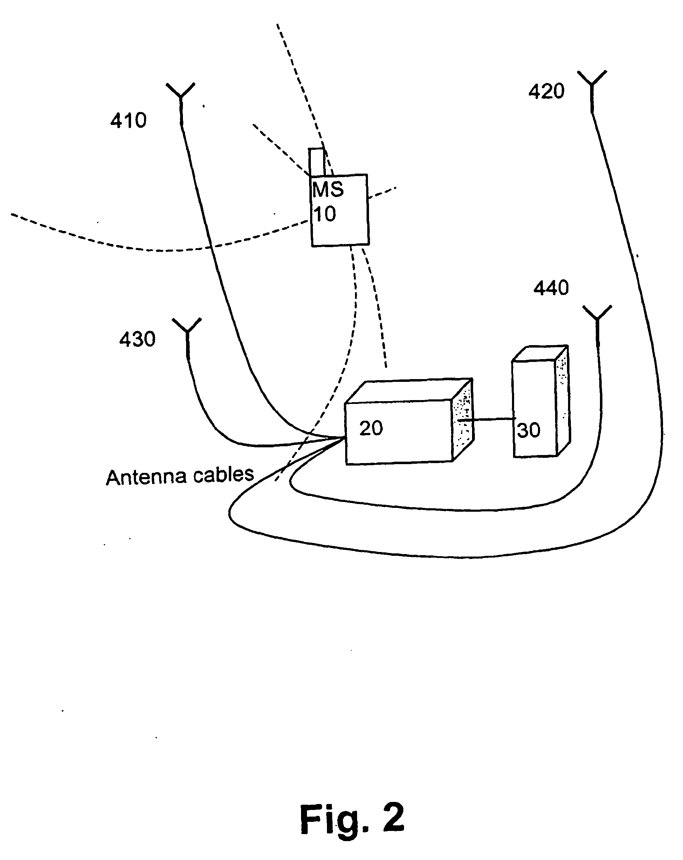

An implementation example is shown in Fig. 2, where the location measurement unit 20 comprises four antennas 410 to 440 connected via antenna cables to the location measurement unit 20. Furthermore, an associated BTS 30 is connected to the location measurement unit 20. The four antennas 410 to 440 can be arranged specifically for the location measurement unit 20, or can be the existing antennas of the BTS 30, so that the BTS 30 and the location measurement unit 20 are both fed by the antennas 410 to 440. The antenna cables may be usual cables or fibre optic cables (e.g. in a Fibre Optic Distribution System). The dotted lines in Fig. 2 indicate hyperbolas which represent a constant difference in the distance to two of the antennas 410 to 440, wherein the target mobile station 10 is located at the crossing of the hyperbolas.

Each of the analog reception parts 51 to 53 in Fig. 1 comprises the required amplification, filtering and mixing stages to select the received signal according to the instructions from the controller 27, and to transform or convert it to a baseband analog signal supplied to respective analog to digital converters 61 to 63 which are arranged to sample the corresponding analog baseband signal and convert it to digital samples.

The correlator 24 receives the digital samples from the different reception paths and correlates them against each other (e.g. based on a predetermined training sequence pattern or the another distinguishing pattern included in the digital samples) in order to obtain the TDOA values. Furthermore, the correlator 24 may use an RSSI (Received Signal Strength Indicator) information obtained from an RSSI stage 25 to decide which signals to correlate when there are signals from more than three antennas available, as indicated in Fig. 2. Thereby, the strongest signals can be correlated against each others. Additionally, an information 21 about the reception or cable path delays due to different antenna cable lengths may be provided to the correlator 24 to perform a corresponding compensation. The controller 27 controls the correlator 24 by supplying an instruction regarding the timing when TDOA values are needed and which time slot or channel should be used.

Moreover, the controller 27 provides a frame and time slot information to the correlator 24, such that the correlator 24 is able to select the right channel.

The TDOA values generated by the correlator 24 may be provided to an optional location calculator 23, if the location measurement unit 20 calculates the position estimate itself, or may be directly supplied to the controller 27 in order to be transmitted to the SMLC of the cellular network via the signaling unit 26. The correlator 24 may also provide quality figures relating to the generated TDOA values, wherein the quality figures may be used by the location calculator when calculating the position estimate.

If a location estimate is calculated in the location calculator 23, it receives the TDOA values and antenna coordinates 22, and calculates the position estimate and an associated statistical confidence area or interval based on the quality figures. Finally, the position or location estimate is supplied to the controller 27 in order to be transmitted to the SMLC via the signaling unit 26.

Furthermore, the location calculator 23 or the controller 27 may use an averaging function for averaging the TDOA values. However, in this case the measurement values should be monitored in order to detect possible discontinuation points due to handover situations.

The cable delay information 21 and the antenna coordinates 22 may be stored in an internal database or memory.

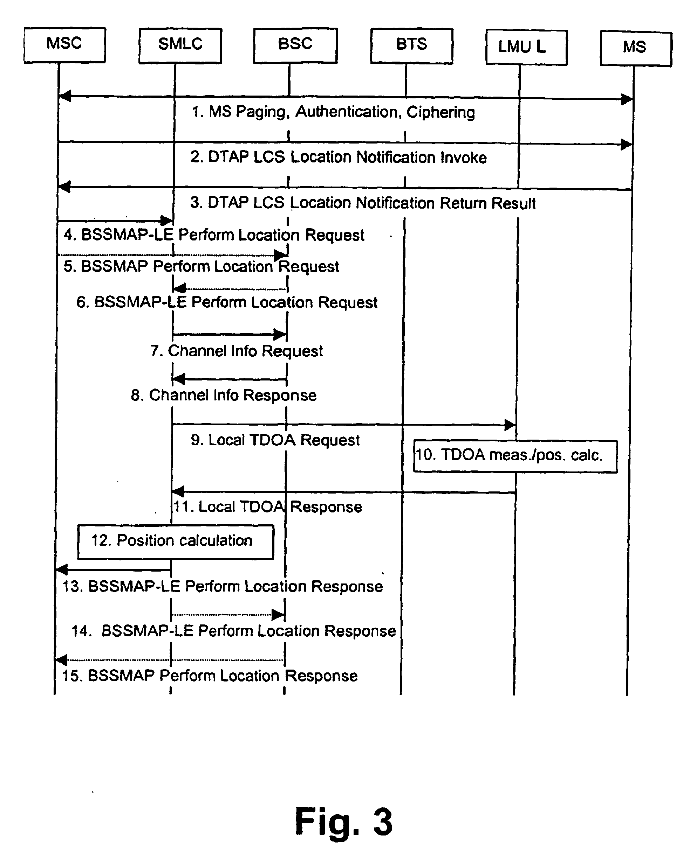

Fig. 3 shows a signaling diagram of a location signaling according to the preferred embodiment implemented within a standardized GSM (Global System for Mobile communication) location system. However, it is noted that the invention can be applied as well to other wireless or cellular systems like UMTS (Universal Mobile Telecommunications System).

As indicated in Fig. 3, an MSC starts a location process in step 1 after having received a location request from a GMLC or as a result of a Mobile-Originated Location Request (MO-LR) from a mobile station. If there is no dedicated channel open to the mobile station yet, the MSC performs paging, authentication, and ciphering in order to open a signaling channel. Thus, the MSC will receive the CI of the BTS serving the mobile station and the TA value. In step 2, the MSC may send a DTAP LCS (Direct Transfer Application Part LoCation System) Location Notification Invoke message to the mobile station in order to inform it about the invoked location procedure, or ask for permission to locate it. The mobile station responds with a DTAP LCS Location Modification Return Result message in step 3. If privacy considerations allow location, the MSC sends a BSSMAP-LE (Base Station System Application Part LCS Extension) Perform Location Request message to the corresponding or associated SMLC, if the SMLC is connected to the MSC (i.e. in the NSS architecture) (step 4). If the SMLC is connected to the BSC (BSS architecture), the MSC sends a BSSMAP Perform Location Request message to the BSC serving the mobile station (step 5). In the case of the BSS architecture, the BSC forwards a BSSMAP-LE Perform Location Request message to the SMLC (step 6).

The SMLC obtains the serving CI and TA from the BSSMAP-LE Perform Location Request message. The SMLC may comprise a database or another storing means from which it reads information about available local location measurement units connected to the serving BTS. Local location measurement units may be associated with small cells, e.g. indoor cells. If there is a location measurement unit available at the serving BTS, the SMLC sends a Channel Info Request message to the BSC (step 7). This message may be used to request information about the channel used by the mobile station, e.g. time slot, frequency and the like. It can be a proprietary, i.e. non-standardized message. In case of a BSS architecture in which the SMLC is integrated into the BSC, the message is an internal message of the BSC. The Channel Info Request message may as well be standardized in upcoming GSM specifications. As a further alternative, the already existing message TOA Request may be used, wherein an intra-channel handover could be selected.

In step 8, the BSC returns a Channel Info Response message which contains information of the channel used by the target mobile station. This message can also be implemented as a proprietary message, i.e. a non-standardized message. In the case of a BSS architecture in which the SMLC is integrated into the BSC, this message is an internal message of the BSC. The Channel Info Response message may as well be standardized in upcoming GSM specifications. As a further alternative, the existing TOA Response message may be used. This message and the TOA Request message are used in the standardized TOA procedure and cause the BSC to perform a handover in order to make the target mobile station send random access bursts. However, this feature is not necessary for the present invention.

In step 9, the SMLC sends a Local TDOA Request message to the determined local location measurement unit. This message can be implemented as a proprietary message, i.e. a non-standardized message. In the case of an E-OTD location method between the SMLC and the location measurement unit, the communication may be implemented using proprietary means such as Operations and Maintenance means (O&M means) or the like. As an alternative, the respective GSM specification 04.71 may be modified to include the Local TDOA Request message.

If the SMLC can assume based on the serving CI that there might be more than one local location measurement unit capable of receiving signals from the target mobile station, it could send the Local TDOA Request message to all available location measurement units. Since the local location measurement unit has to know the timing (time slot) of the target mobile station, there is more signaling complexity required for local location measurement units not associated with the serving BTS. This problem could be solved in such a manner that the SMLC sends frame number offset and Real Time Difference (RTD) values between the BTS serving the target mobile station and the BTS associated with a concerned Location Measurement unit, if it has those available (e.g. for the E-OTD method).

In step 10, the local measurement unit 20 performs the necessary TDOA measurement and processing steps, as described with reference to Figs. 1 and 2. Then, in step 11, the local location measurement unit 20 responds with a Local TDOA Response message. This message contains either a location estimate or measured TDOA values between different antennas or other measuring units together with identities or coordinates of the antennas or measurement units. Additionally, the confidence area or interval of the location estimate or other quality indications relating to the TDOA values may be send. If a location estimate is returned with the Local TDOA Response message, the SMLC checks the sensibility or plausibility e.g. based on a comparison to the cell coverage. If TDOA values are returned, the SLMC calculates the position estimate itself (step 12). In case of an NSS architecture, the SLMC sends a BSSMAP-LE Perform Location Response message containing the position estimate to the MSC (step 13). On the other hand, in case of a BSS architecture, the SLMC sends a BSSMAP-LE Perform Location Response message containing the position estimate to the BSC (step 14), and the BSC returns a BSSMAP Perform Location Response message containing the position estimate to the MSC (step 15). Thus, the above steps 5, 6 and 14, 15 are alternative steps to the steps 4 and 13, respectively.

According to the present invention, the local location measurement unit 20 performs TDOA measurements or even a position estimate and reports the location or TDOA values to the SLMC. Thus the location measurement units do not have to be synchronized by a common clock such as a GPS clock. Thereby, indoor use is facilitated. In the known standard TDOA method, a location measurement unit typically takes the sample signal and correlates it against the expected training sequence (bit pattern) in order to obtain an impulse response based on which the TOA can be estimated. Thus, the TOA is estimated by comparing the received signal against the clock of the local measurement unit. At a later stage, the SMLC uses the TOA values received from different location measurement units and forms the TDOA. In contrast thereto, according to the present invention, the measuring signals obtained from different antennas or measuring units are correlated against each other directly at the local location measurement unit to form TDOA values or a position estimate. Thus, the phase of the TOA values does not have to be considered.

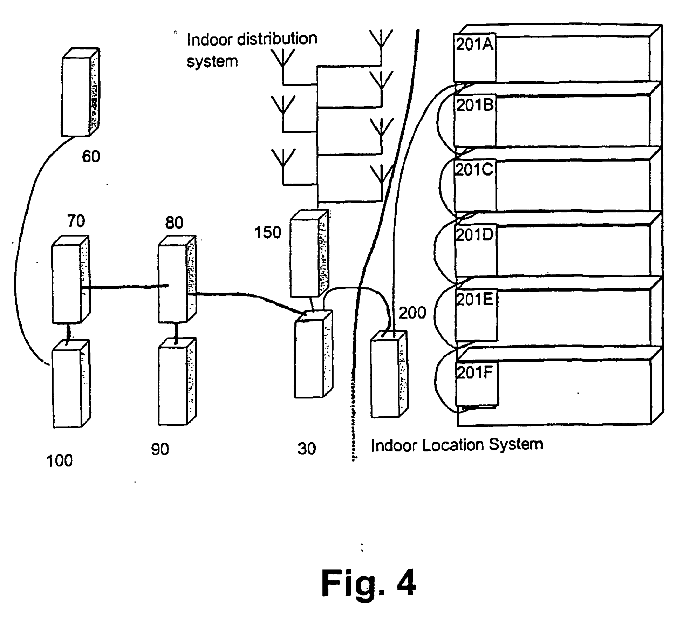

Fig. 4 shows an indoor location system according to the second preferred embodiment, where a plurality of measuring units 201A to 201 F are arranged e.g. on different floors of a building and are connected to a local location measurement unit called Serving Indoor Location Calculator (SILC) 200. This SILC 200 is connected to a BTS 30 to which an indoor distribution system 150 is connected. The indoor distribution system may be an active distributed antenna system (ADAS), a distributed antenna system (DAS), or a fibre optic distribution system (FODS), by means of which network signals are distributed to the indoor environment. The BTS is connected to a BSC 80 having an associated SMLC 90 (BSS architecture) and being connected via an MSC 70 to a GMLC 100. The GMLC 100 is connected to a location application node 60 from which a location request may be issued to the GMLC 100. The SILC 200 receives measuring signals from a target mobile terminal located in the building via the plurality of measuring units 201A to 201F, and performs a location estimate based on the received signals or data, e.g. AOA and/or signal strength level values. Thereby, the indoor coverage problem is removed and the cost of installing several location measurement units in the building are reduced by utilizing standard measuring means to transfer the measuring results or signals to the centralized SILC 200 which then could simulate a conventional LMU reporting the location of the target mobile station or terminal with standard network messages, e.g. TOA or E-OTD or GPS messages. Thus, the indoor location system can be described as a location measurement unit which has been split into two main parts, a measuring part consisting of the measuring units 201 A to 201 F and a calculating part consisting of the SILC 200.

In particular, the need to locate a mobile terminal has become relevant e.g. due to the emergence call location requirement (referred to as E911) of the US Federal Communication Commission (FCC) or the planned emergency call requirement (referred to as E112) of the European Union. However, the system according to Fig. 4 is not limited to an indoor location system but can be implemented to cover problematic outdoor areas to enhance the location accuracy. The connection between the measurement units 201 A to 201 F and the SILC can be established via data connections, such as an LAN, WAN or WLAN. The location system can be used with any mobile interface, such as a GSM interface.

The measuring units or indoor measuring units (IMUs) 201A to 201 F may be simple AOA and Rx-Level receivers with suitable LAN or WAN connection. The SILC 200 performs calculation of the data provided by the IMUs 201 A to 201 F and reports the result either in standard format or proprietary format to the SMLC 90 or directly to a locating center. At the SILC 200 an information about the location of the IMUs 201A to 201 F inside the building is stored, e.g. in a corresponding database. The SILC 200 is arranged to synchronize the IMUs 201 A to 201 F via the data connection. Each IMU reports the results of the Rx-level and the AOA to the SILC 200 which performs the location calculation of the target mobile station. Furthermore, each IMU may be capable of reporting the status and software version to the SILC 200 upon request.

The SILC 200 collects the data from the IMUs 201A to 201 F via the data connection, e.g. LAN, WAN, WLAN or other suitable network, stores the data, and calculates a position or location information of the target mobile station. If the position of the target mobile station, is requested, the SILC 200 reports the information to the requesting party, e.g. the SMLC 90 or a location center. The position or location of the target mobile station may be calculated based on the AOA information or the Rx-level information or a combination of both. The IMUs 201 A to 201 F may be adapted to provide other positioning information which may be used as well.

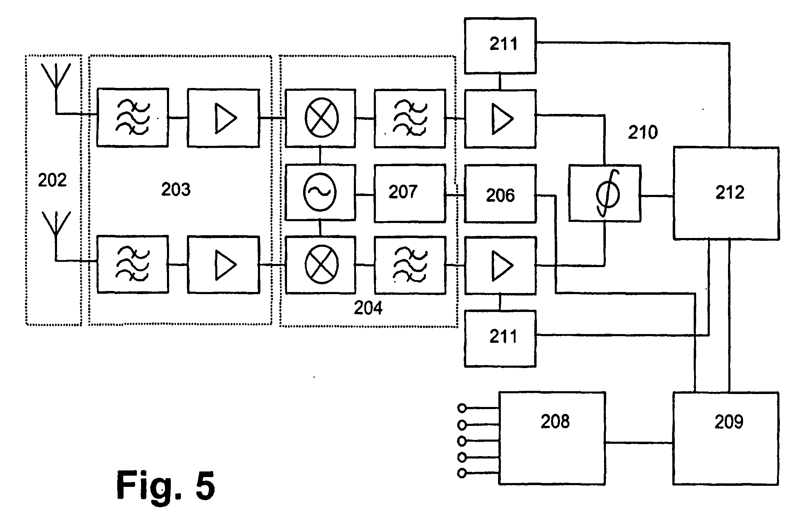

Fig. 5 shows a schematic diagram of a measuring unit such as one of the IMUs 201A to 201 F.

The measurements in the IMUs 201A to 201F can be achieved by inexpensive radio receivers and can be converted to digital form in order to be transmitted to the SILC. In particular, a measuring unit shown in Fig. 5 may consist of two antennas 202 and a front-end receiver part 203 at desired frequency bands, e.g. GSM 900, 1800 or 1900, or other related frequencies.

A signal from a target mobile station arrives at different points in time at the two antennas 202. This time different corresponds to the angle at which the signal arrives and can be detected at a phase detector 210. The phase detector 210 outputs a DC voltage which is related to the phase difference between the signals received by the two antennas 202. This DC voltage is then digitized in an analog-to-digital converter 212. An RSSI value can be used as an indicator indicating the distance of the target mobile station to the respective antenna and is obtained in corresponding RSSI stages 211.

Furthermore, a down conversion stage 204 is provided where a received signal is mixed with a local oscillator frequency controlled by a phase-locked loop (PLL) circuit 207 via an input/output stage 206 to which a microprocessor 209 is connected. Thus, the microprocessor 209 may adjust the local oscillator frequency and thus the reception channel of the measuring unit. The microprocessor 209 compares the RSSI values received via the AD converter 212 and stores the values if the signal level is strong enough to allow phase measurements. The RSSI values may be compared in the SILC 200 to determine the location of the target mobile station with respect to the IMUs 201A to 201 F. A more accurate location information can be obtained when the AOA of phase information received from the IMUs 201 A to 201 F is compared.

The microprocessor 209 is connected to the data connection system and thus to the SILC 200 via a data interface 208, e.g. a LAN or WAN or WLAN interface.

The two antennas 202 can be spaced horizontally to give a horizontal position, or can be spaced vertically to give a vertical position of the target mobile station. Furthermore, the two antennas at the IMUs 201A to 201 F may be used to provide a diversity gain so as to achieve a better and more reliable RSSI measurement. Based on the AOA measurement in combination with the known locations of the IMUs 201A to 201 F, the position of the target mobile can be determined based on the crossing of the respective angle lines. Using the RSSI levels of different IMUs, it can be estimated which of the IMUs is closer to the target mobile station.

The antennas 202 can be vertically, horizontally or circular polarized to give optimum reliability of the RSSI measurement. The RSSI measurement can be used for the positioning of the mobile, when the AOA value is not available, i.e. the other antenna has a minimum in the antenna characteristics at the respective angle, and the phase value of the measurement is not reliable. Furthermore, antenna or polarity diversity can be used if an additional RF (radio frequency) switch is added to the antenna connector and two 45°-slanted antennas are connected to it. The RSSI value is then excessively measured with one of the antennas and thereafter with the other one. The antenna which provides the higher or better RSSI value can then be used for the measurement. The same polarity antenna is then used for the AOA measurement. The AOA and RSSI values can be measured several times within one time slot. In this case, either averaging or discriminating can be used to improve the reliability of the measurement values.

In case the local oscillator has 3G (3rd generation) properties, it is possible to provide a system which supports 3rd generation mobile communication system features. Then, a de-spreading sequence of the target mobile station is downloaded to the IMUs, e.g. via the SILC 200 or the indoor distribution system, so that the signals received from the target mobile station can be detected to locate the target mobile station. The actual data does not have to be demodulated in the indoor location system, but the data channel should be found to be able to determine the direction of the target mobile station.

Each IMU could be synchronized so as to listen to downlink signals of the GSM network or other cellular network, e.g. once/day or in an idle period, wherein a sample clock generator of an IMU is synchronized to the BCCH period and burst time of the GSM network, or corresponding periods and times of other cellular networks.

Thus, the present invention provides a new location estimation method which is especially suited for indoor use or high accurate location requirements. The network signaling load is reduced due to the fact that a location estimate or at least TDOA values are calculated at the local location measurement units.

It is noted that the present invention is not limited to the above described particular embodiments but can be applied to any location system for locating a terminal device in a cellular network within the scope of the attached claims.

## Claims

1. A method for locating a wireless terminal device (10) in a cellular network, said method comprising the steps of:
a) providing at least two spatially diverse local measurement units (41 - 43; 410 - 440; 201A - 201 F) arranged at a local determination unit (20; 200) and adapted to receive a signal from said wireless terminal device (10);
b) processing measurements signals received from said at least two local measurement units (41 - 43; 410 - 440; 201A - 201 F) at said local determination unit (20; 200) to obtain a location information of said wireless terminal device (10); and
c) transmitting said location information to a location center (90) of said cellular network in response to a location request received from said location center (90).

2. A method according to claim 1, wherein said processing step comprises obtaining a time difference of arrival of said measurement signals.

3. A method according to claim 2, wherein said time difference of arrival of said measurement signals is obtained using correlation.

4. A method according to claim 3, wherein said correlation is done by cross-correlating directly two measurement signals.

5. A method according to any one of the preceding claims, further comprising the step of determining said local determination unit (20; 200) at said location center (90) based on a cell identity.

6. A method according to claim 5, wherein said cell identity is obtained from a perform location request message from said cellular network.

7. A method according to claim 6, wherein said perform location request message is a BSSMAP-LE Perform Location Request message.

8. A method according to any one of the preceding claims, further comprising the step of storing at said location center (90) an information about available local determination units.

9. A method according to any one of the preceding claims, further comprising the step of requesting an information of a channel used by said wireless terminal device (10) from a network element.

10. A method according to any one of the preceding claims, wherein said location request received from said location center (90) is a time difference of arrival request message.

11. A method according to any one of the preceding claims, further comprising the step of transmitting said location request from said location center (90) to a plurality of local determination units.

12. A method according to any one of the preceding claims, wherein said location information is a location estimate of the location of said wireless terminal device (10) calculated at said local determination unit (20; 200).

13. A method according to any one of claims 1 to 11, wherein said location information is a time difference of arrival information.

14. A method according to claim 13, further comprising the step of calculating a position estimate of said wireless terminal device (10) at said location center (90) based on said time difference of arrival information.

15. A system for locating a wireless terminal device (10) in a cellular network, said system comprising:
a) at least two spatially diverse local measurement units (41 - 43; 410 - 440; 201A - 201 F) for receiving a signal from said wireless terminal device (10);
b) a local determination unit (20; 200) for receiving measurement signals from said local measurement units (41 - 43; 410 - 440; 201A - 201 F) and for processing said received measurement signals to obtain a location information of said wireless terminal device (10); and
c) a location center (90) for receiving said location information from said local determination unit (20; 200) in response to a location request transmitted by said location center (90) and for providing a location estimate of said wireless terminal device (10) to said cellular network.

16. A system according to claim 15, wherein said location center (90) comprises a database for storing information about available local determination units.

17. A system according to claim 15 or 16, wherein said location center is a Serving Mobile Location Center (90).

18. A system according to any one of claims 15 to 17, wherein said location information is a time difference of arrival information or a location estimate.

19. A system according to any one of claims 15 to 18, wherein said at least two local measurement units are antenna means (41 - 43; 410 - 440).

20. A system according to any one of claims 15 to 18, wherein said at least two measurement units are indoor measuring units (201A - 201 F) for performing phase and/or strength measurements of said signal received from said wireless terminal device (10).

21. A network device for determining a location information of a wireless terminal device (10), said network device (20; 200) comprising:
a) receiving means (51 - 53) for receiving measuring signals from at least two spatially diverse measurement units (41 - 43; 410 - 440; 201A - 201 F) arranged at said network device (20; 200) and adapted to receive a signal from said wireless terminal device (10);
b) determination means (23, 24) for processing said received measuring signals to generate a location information of said wireless terminal device (10); and
c) signaling means (26) for providing said location information to a location center (90) of a cellular network in response to a location request received from said location center.

22. A network device according to claim 21, wherein said determination means comprises a correlation means (24) and a location calculator (23) for calculating a position estimate of said wireless terminal device (10).

23. A network device according to claim 22, wherein said correlating means (24) is arranged to correlate said received measuring signals to obtain time difference of arrival values.

24. A network device according to claim 23, wherein said location calculator (23) is arranged to average said time difference of arrival values.

25. A network device according to any one of claims 21 to 24, further comprising controller means (27) for receiving a channel information contained in said received location request and for adjusting said receiving means (51 - 53) based on said channel information.

26. A network device according to any one of claims 21 to 25, wherein said network device is a local location measurement unit (20) connected to a base transceiver station of a cellular network.

27. A network device according to any one of claims 21 to 26, wherein said at least two measurement units are antenna means (41 - 43; 410 - 440) or measuring units (201A - 201 F).

28. A network device according to claim 27, wherein said antenna means (41 - 43; 420 - 440) are base transceiver station antennas.

29. A network device according to any one of claims 21 to 28, wherein said network device is a serving indoor location calculator (200) arranged to perform a position calculation based on phase and/or strength measurement signals received from at least two indoor measuring units (201A - 201 F) and based on a location information indicating the location of said at least two indoor measuring units (201 A - 201 F) inside a building.

30. A network device according to claim 29, wherein said serving indoor location calculator (200) is arranged to synchronize said at least two indoor measuring unites (201A - 201 F) via a data connection.

31. A network device according to claims 29 or 30, wherein said data connection is a LAN, WAN or WLAN.

32. A network device for providing a location estimate of a wireless terminal device (10) to a cellular network, wherein said network device (90) is arranged to determine a local determination unit (20; 200), to transmit a location request to said local determination unit (20; 200), when a request for locating said wireless terminal device (10) has been received from said cellular network, and to provide a location estimate of said wireless terminal device (10) to said cellular network based on a location information received from said local determination unit (20; 200) in response to said location request.

33. A network device according to claim 32, wherein said network device is a Serving Mobile Location Center (90).

34. A network device according to claim 32 or 33, wherein said location information is a time difference of arrival information or said location estimate.

35. A measuring unit for an indoor location system of a cellular network, said measuring unit (201A - 201 F) comprising:
a) receiving means (203) for receiving a signal transmitted from a wireless terminal device (10) via at least two antenna means (202) arranged at a predetermined distance from each other;
b) measuring means (210, 211) for measuring phase and/or strength values of signals obtained from said two antenna means (202); and
c) processing means (209) for evaluating the quality of said measured phase and/or strength values of said received signals and for providing said measured phase and/or strength values to a local location determination unit (200) based on said evaluated quality.

36. A measuring unit according to claim 35, wherein said predetermined distance corresponds to approximately half the wavelength of said received signal.

37. A measuring unit according to claim 35 or 36, wherein said measuring means comprises first measuring means (211) for obtaining an RSSI value and second measuring means (210) for obtaining an angle of arrival information.

38. A measuring unit according to any one of claims 35 to 37, wherein said measuring unit (201 A - 201 F) is arranged to transmit a status and/or version information to said local location determination unit (200) in response to a corresponding request.

39. A measuring unit according to any one of claims 35 to 38, wherein a de-spreading sequence is downloaded from said cellular network to said measuring unit (201A - 201 F).

40. A measuring unit according to any one of claims 35 to 39, wherein said processing means (209) is arranged to send data to said local location determination unit (200) via a data connection.

41. A measuring unit according to any one of claims 35 to 40, wherein said measuring means (210, 211) is arranged to perform said measurement several times within one time slot of said received signal.

## Patentansprüche

1. Verfahren zum Lokalisieren einer drahtlosen Endgerätevorrichtung (10) in einem zellenförmigen Netzwerk, wobei das Verfahren die Schritte aufweist:
a) Bereitstellen wenigstens zweier räumlich verschiedener Ortsmesseinheiten (41 - 43; 410 - 440; 201A - 201 F), die an einer Ortsbestimmungseinheit (20; 200) angeordnet sind und angepasst sind, um ein Signal von der drahtlosen Endgerätevorrichtung (10) zu empfangen;
b) Verarbeiten von Messsignalen, die von den wenigstens zwei Ortsmesseinheiten (41 - 43; 410 - 440; 201A - 201 F) an der Ortsbestimmungseinheit (20; 200) empfangen wurden, um eine Ortsinformation der drahtlosen Endgerätevorrichtung (10) zu erhalten; und
c) Übertragen der Ortsinformation an eine Ortszentrale (90) des zellenförmigen Netzwerks in Reaktion auf eine von der Ortszentrale (90) empfange Ortsanforderung.

2. Verfahren nach Anspruch 1, wobei der Verarbeitungsschritt Erhalten einer Ankunftszeitdifferenz der Messsignale umfasst.

3. Verfahren nach Anspruch 2, wobei die Ankunftszeitdifferenz der Messsignale unter Anwenden von Korrelation erhalten wird.

4. Verfahren nach Anspruch 3, wobei die Korrelation durch Kreuzkorrelation direkt zweier Messsignale durchgeführt wird.

5. Verfahren nach einem der vorhergehenden Ansprüche, wobei es weiter den Schritt Bestimmen der Ortsbestimmungseinheit (20; 200) an der Ortszentrale (90) basierend auf einer Zellenkennung umfasst.

6. Verfahren nach Anspruch 5, wobei die Zellenkennung von einer Anforderungsnachricht für die Durchführung einer Lokalisierung von dem zellenförmigen Netzwerk erhalten wird.

7. Verfahren nach Anspruch 6, wobei die Anforderungsnachricht eine BSSMAP-LE Perform Location Request Message ist.

8. Verfahren nach einem der vorhergehenden Ansprüche, wobei es weiter den Schritt Speichern von Informationen über verfügbare Ortsbestimmungseinheiten an der Ortszentrale (90) umfasst.

9. Verfahren nach einem der vorhergehenden Ansprüche, wobei es weiter den Schritt Anfordern einer Information eines durch die drahtlose Endgerätevorrichtung (10) verwendeten Kanals von einem Netzwerkelement umfasst.

10. Verfahren nach einem der vorhergehenden Ansprüche, wobei die von der Ortszentrale (90) empfangene Ortsanforderung eine Anforderungsnachricht für eine Ankunftszeitdifferenz ist.

11. Verfahren nach einem der vorhergehenden Ansprüche, wobei es weiter den Schritt Übertragen der Ortsanforderung von der Ortszentrale (90) an eine Vielzahl von Ortsbestimmungseinheiten umfasst.

12. Verfahren nach einem der vorhergehenden Ansprüche, wobei die Ortsinformation eine an der Ortsbestimmungseinheit (20; 200) berechnete Ortsschätzung des Orts der drahtlosen Endgerätevorrichtung (10) ist.

13. Verfahren nach einem der Ansprüche 1 bis 11, wobei die Ortsinformation eine Ankunftszeitdifferenzinformation ist.

14. Verfahren nach Anspruch 13, wobei es weiter den Schritt Berechnen einer Positionsschätzung der drahtlosen Endgerätevorrichtung (10) an der Ortszentrale (90) basierend auf der Ankunftszeitdifferenzinformation umfasst.

15. System zum Lokalisieren einer drahtlosen Endgerätevorrichtung (10) in einem zellenförmigen Netzwerk, wobei das System umfasst:
a) wenigstens zwei räumlich verschiedene Ortsmesseinheiten (41 - 43; 410 - 440; 201A - 201 F) zum Empfangen eines Signals von der drahtlosen Endgerätevorrichtung (10);
b) eine Ortsbestimmungseinheit (20; 200) zum Empfangen von Messsignalen von den Ortsmesseinheiten (41 - 43; 410 - 440; 201A - 201 F) und zum Verarbeiten der empfangenen Messsignale, um eine Ortsinformation der drahtlosen Endgerätevorrichtung (10) zu erhalten; und
c) eine Ortszentrale (90) zum Empfangen der Ortsinformation von der Ortsbestimmungseinheit (20; 200) in Reaktion auf eine durch die Ortszentrale (90) übertragene Ortsanforderung und zum Bereitstellen einer Ortsschätzung der drahtlosen Endgerätevorrichtung (10) an das zellenförmige Netzwerk.

16. System nach Anspruch 15, wobei die Ortszentrale (90) eine Datenbank zum Speichern von Informationen über verfügbare Ortsbestimmungseinheiten umfasst.

17. System nach Anspruch 15 oder 16, wobei die Ortszentrale eine bedienende Mobilortszentrale ist.

18. System nach einem der Ansprüche 15 bis 17, wobei die Ortsinformation eine Ankunftszeitdifferenzinformation oder eine Ortsschätzung ist.

19. System nach einem der Ansprüche 15 bis 18, wobei die wenigstens zwei Ortsmesseinheiten Antennenmittel (41 - 43; 410 - 440) sind.

20. System nach einem der Ansprüche 15 bis 18, wobei die wenigstens zwei Messeinheiten Innenraummesseinrichtungen (201A - 201 F) zum Durchführen von Phasen- und/oder Stärkenmessungen des von der drahtlosen Endgerätevorrichtung (10) empfangenen Signals sind.

21. Netzwerkvorrichtung zum Bestimmen einer Ortsinformation einer drahtlosen Endgerätevorrichtung (10), wobei die Netzwerkvorrichtung (20; 200) umfasst:
a) Empfangsmittel (51 - 53) zum Empfangen von Messsignalen von wenigstens zwei räumlich verschiedenen Messeinheiten (41 - 43; 410 - 440; 201A - 201 F), die an der Netzwerkvorrichtung (20; 200) angeordnet sind, und eingerichtet sind, ein Signal von der drahtlosen Endgerätevorrichtung (10) zu empfangen;
b) Bestimmungsmittel (23, 24) zum Verarbeiten der empfangenen Messsignale, um eine Ortsinformation der drahtlosen Endgerätevorrichtung (10) zu erzeugen; und
c) Signalisierungsmittel (26) zum Bereitstellen der Ortsinformation an eine Ortszentrale (90) eines zellenförmigen Netzwerks in Reaktion auf eine von der Ortszentrale empfangenen Ortsanforderung.

22. Netzwerkvorrichtung nach Anspruch 21, wobei die Bestimmungsmittel ein Korrelationsmittel (24) und eine Ortsberechnungseinrichtung (23) zum Berechnen einer Positionsschätzung der drahtlosen Endgerätevorrichtung (10) umfassen.

23. Netzwerkvorrichtung nach Anspruch 22, wobei die Korrelationsmittel (24) eingerichtet sind, um die empfangenen Messsignale zu korrelieren, um Ankunftszeitdifferenzwerte zu erhalten.

24. Netzwerkvorrichtung nach Anspruch 23, wobei die Ortsberechnungseinrichtung (23) eingerichtet ist, die Ankunftszeitdifferenzwerte zu mitteln.

25. Netzwerkvorrichtung nach einem der Ansprüche 21 bis 24, wobei es weiter Steuermittel (27) zum Empfangen einer Kanalinformation, die in der empfangenen Ortsanforderung enthalten ist, und zum Anpassen der Empfangsmittel (51 - 53) basierend auf den Kanalinformationen umfasst.

26. Netzwerkvorrichtung nach einem der Ansprüche 21 bis 25, wobei die Netzwerkvorrichtung eine lokale Ortsmesseinheit (20) ist, die mit einer Basissende-/empfangsstation eines zellenförmigen Netzwerks verbunden ist.

27. Netzwerkvorrichtung nach einem der Ansprüche 21 bis 26, wobei die wenigstens zwei Messeinheiten Antennenmittel (41 - 43; 410 - 440) oder Messeinheiten (201A - 201 F) sind.

28. Netzwerkvorrichtung nach Anspruch 27, wobei die Antennenmittel (41 - 43; 420 - 440) Basissende-/empfangsstationsantennen sind.

29. Netzwerkvorrichtung nach einem der Ansprüche 21 bis 28, wobei die Netzwerkvorrichtung eine bedienende Innenraumortsberechnungseinrichtung (200) ist, die eingerichtet ist, um eine Positionsberechnung basierend auf Phasen- und/oder Stärkenmesssignalen, die von wenigstens zwei Innenraummesseinheiten (201A - 201 F) empfangen wurden, durchzuführen und basierend auf einer Ortsinformation, die den Ort der wenigstens zwei Innenraummesseinheiten (201A - 201 F) innerhalb eines Gebäudes anzeigen, durchzuführen.

30. Netzwerkvorrichtung nach Anspruch 29, wobei die bedienende Innenraumortsberechnungseinrichtung (200) eingerichtet ist, die wenigstens zwei Innenraummesseinheiten (201A - 201 F) über eine Datenverbindung zu synchronisieren.

31. Netzwerkvorrichtung nach Anspruch 29 oder 30, wobei die Datenverbindung ein LAN, WAN oder WLAN ist.

32. Netzwerkvorrichtung zum Bereitstellen einer Ortsschätzung einer drahtlosen Endgerätevorrichtung (10) an ein zellenförmiges Netzwerk, wobei die Netzwerkvorrichtung (90) eingerichtet ist, eine Ortsbestimmungseinheit (20; 200) zu bestimmen, eine Ortsanforderung an die Ortsbestimmungseinheit (20; 200) zu senden, wenn eine Anforderung für eine Lokalisierung der drahtlosen Endgerätevorrichtung (10) von dem zellenförmigen Netzwerk erhalten worden ist, und eine Ortsschätzung der drahtlosen Endgerätevorrichtung (10) an das zellenförmige Netzwerk basierend auf einer von der Ortsbestimmungseinheit (20; 200) empfangenen Ortsinformation in Reaktion auf die Ortsanforderung bereitzustellen.

33. Netzwerkvorrichtung nach Anspruch 32, wobei die Netzwerkvorrichtung eine bedienende Mobilortszentrale (90) ist.

34. Netzwerkvorrichtung nach Anspruch 32 oder 33, wobei die Ortsinformation eine Ankunftszeitdifferenzinformation oder eine Ortsschätzung ist.

35. Messeinheit für ein Innenraumortssystem eines zellenförmigen Netzwerks, wobei die Messeinheit (201A - 201 F) umfasst:
a) Empfangsmittel (203) zum Empfangen eines Signals, das von einer drahtlosen Endgerätevorrichtung (10) über wenigstens zwei Antennenmittel (202) übertragen wurde, die an einem vorherbestimmten Abstand zueinander angeordnet sind;
b) Messmittel (210, 211) zum Messen von Phasen- und/oder Stärkenwerten von Signalen, die von den zwei Antennenmitteln (202) erhalten wurden; und
c) Verarbeitungsmittel (209) zum Auswerten der Qualität der gemessenen Phasen- und/oder Stärkenwerten der empfangenen Signale und zum Bereitstellen der gemessenen Phasen- und/oder Stärkenwerte an eine lokale Ortsbestimmungseinheit (200) basierend auf der ausgewerteten Qualität.

36. Messeinheit nach Anspruch 35, wobei der vorherbestimmte Abstand näherungsweise der Hälfte der Wellenlänge des empfangenen Signals entspricht.

37. Messeinheit nach Anspruch 35 oder 36, wobei die Messmittel erste Messmittel (211) zum Erhalten eines RSSI-Wertes und zweite Messmittel (210) zum Erhalten einer Ankunftswinkelinformation umfassen.

38. Messeinheit nach einem der Ansprüche 35 bis 37, wobei die Messeinheit (201 A - 201 F) eingerichtet ist, eine Status- und/oder Versionsinformation an die lokale Ortsbestimmungseinheit (200) in Reaktion auf eine entsprechende Anforderung zu übertragen.

39. Messeinheit nach einem der Ansprüche 35 bis 38, wobei eine Entspreizungssequenz von dem zellenförmigen Netzwerk an die Messeinheit (201A - 201 F) heruntergeladen wird.

40. Messeinheit nach einem der Ansprüche 35 bis 39, wobei die Verarbeitungsmittel (209) eingerichtet sind, Daten an die lokale Ortsbestimmungseinheit (200) über eine Datenverbindung zu senden.

41. Messeinheit nach einem der Ansprüche 35 bis 40, wobei die Messmittel (210, 211) eingerichtet sind, die Messung mehrere Male innerhalb eines Zeitschlitzes des empfangenen Signals durchzuführen.

## Revendications

1. Procédé de localisation d'un dispositif de terminal sans fil (10) dans un réseau cellulaire, ledit procédé comprenant les étapes consistant à :
a) fournir au moins deux unités de mesure locales spatialement variables (41-43 ; 410-440 ; 201A-201F) agencées au niveau d'une unité de détermination locale (20 ; 200) et adaptées pour recevoir un signal en provenance dudit dispositif de terminal sans fil (10) ;
b) traiter des signaux de mesure reçus en provenance desdites au moins deux unités de mesure locales (41-43 ; 410-440 ; 201A-201F) au niveau de ladite unité de détermination locale (20; 200) pour obtenir des informations de localisation dudit dispositif de terminal sans fil (10) ; et
c) émettre lesdites informations de localisation vers un centre de localisation (90) dudit réseau cellulaire en réponse à une requête de localisation reçue en provenance dudit centre de localisation (90).

2. Procédé selon la revendication 1, dans lequel ladite étape de traitement comprend l'étape consistant à obtenir une différence de temps d'arrivée desdits signaux de mesure.

3. Procédé selon la revendication 2, dans lequel ladite différence de temps d'arrivée desdits signaux de mesure est obtenue en utilisant la corrélation.

4. Procédé selon la revendication 3, dans lequel ladite corrélation est effectuée par corrélation croisée directe de deux signaux de mesure.

5. Procédé selon l'une quelconque des revendications précédentes, comprenant en outre l'étape consistant à déterminer ladite unité de détermination locale (20 ; 200) au niveau dudit centre de localisation (90) selon une identité de cellule.

6. Procédé selon la revendication 5, dans lequel ladite identité de cellule est obtenue à partir d'un message de réalisation de requête de localisation en provenance dudit réseau cellulaire.

7. Procédé selon la revendication 6, dans lequel ledit message de réalisation de requête de localisation est un message de réalisation de requête de localisation BSSMAP-LE.

8. Procédé selon l'une quelconque des revendications précédentes, comprenant en outre l'étape consistant à stocker au niveau dudit centre de localisation (90) des informations à propos des unités de détermination locales disponibles.

9. Procédé selon l'une quelconque des revendications précédentes, comprenant en outre l'étape consistant à demander des informations d'un canal utilisé par ledit dispositif de terminal sans fil (10) auprès d'un élément de réseau.

10. Procédé selon l'une quelconque des revendications précédentes, dans lequel ladite requête de localisation reçue en provenance dudit centre de localisation (90) est un message de requête de différence de temps d'arrivée.

11. Procédé selon l'une quelconque des revendications précédentes, comprenant en outre l'étape consistant à émettre ladite requête de localisation depuis ledit centre de localisation (90) vers une pluralité d'unités de détermination locales.

12. Procédé selon l'une quelconque des revendications précédentes, dans lequel lesdites informations de localisation sont une estimation de localisation de la localisation dudit dispositif de terminal sans fil (10) calculée au niveau de ladite unité de détermination locale (20 ; 200).

13. Procédé selon l'une quelconque des revendications 1 à 11, dans lequel lesdites informations de localisation sont des informations de différence de temps d'arrivée.

14. Procédé selon la revendication 13, comprenant en outre l'étape consistant à calculer une estimation de position dudit dispositif de terminal sans fil (10) au niveau dudit centre de localisation (90) en fonction desdites informations de différence de temps d'arrivée.

15. Système destiné à localiser un dispositif de terminal sans fil (10) dans un réseau cellulaire, ledit système comprenant :
a) au moins deux unités de mesure locales spatialement variables (41-43 ; 410-440 ; 201A-201F) destinées à recevoir un signal en provenance dudit dispositif de terminal sans fil (10) ;
b) une unité de détermination locale (20 ; 200) destinée à recevoir des signaux de mesure en provenance desdites unités de mesure locales (41-43 ; 410-440 ; 201A-201F) et destinée à traiter lesdits signaux de mesure reçus pour obtenir des informations de localisation dudit dispositif de terminal sans fil (10) ; et
c) un centre de localisation (90) destiné à recevoir lesdites informations de localisation en provenance de ladite unité de détermination locale (20 ; 200) en réponse à une requête de localisation émise par ledit centre de localisation (90) et destiné à fourni une estimation de localisation dudit dispositif de terminal sans fil (10) au dit réseau cellulaire.

16. Système selon la revendication 15, dans lequel ledit centre de localisation (90) comprend une base de données destinée à stocker des informations à propos des unités de détermination locales disponibles.

17. Système selon la revendication 15 ou 16, dans lequel ledit centre de localisation est un centre de localisation mobile de service (90).

18. Système selon l'une quelconque des revendications 15 à 17, dans lequel lesdites informations de localisation sont des informations de différence de temps d'arrivée ou une estimation de localisation.

19. Système selon l'une quelconque des revendications 15 à 18, dans lequel lesdites au moins deux unités de mesure locales sont des moyens formant antenne (41-43 ; 410-440).

20. Système selon l'une quelconque des revendications 15 à 18, dans lequel lesdites au moins deux unités de mesure sont des unités de mesure intérieures (201A-201F) destinées à réaliser des mesures de phase et/ou de force dudit signal reçu en provenance dudit dispositif de terminal sans fil (10).

21. Dispositif de réseau destiné à déterminer des informations de localisation d'un dispositif de terminal sans fil (10), ledit dispositif de réseau (20 ; 200) comprenant :
a) des moyens de réception (51-53) destinés à recevoir des signaux de mesure en provenance d'au moins deux unités de mesure spatialement variables (41-43 ; 410-440 ; 201A-201F) agencées au niveau dudit dispositif de réseau (20 ; 200) et adaptés pour recevoir un signal en provenance dudit dispositif de terminal sans fil (10) ;
b) des moyens de détermination (23, 24) destinés à traiter lesdits signaux de mesure reçus pour générer des informations de localisation dudit dispositif de terminal sans fil (10) ; et
c) des moyens de signalisation (26) destinés à fournir lesdites informations de localisation à un centre de localisation (90) d'un réseau cellulaire en réponse à une requête de localisation reçue en provenance dudit centre de localisation.

22. Dispositif de réseau selon la revendication 21, dans lequel lesdits moyens de détermination comprennent des moyens de corrélation (24) et un calculateur de localisation (23) destiné à calculer une estimation de position dudit dispositif de terminal sans fil (10).

23. Dispositif de réseau selon la revendication 22, dans lequel lesdits moyens de corrélation (24) sont agencés pour corréler lesdits signaux de mesure reçus pour obtenir des valeurs de différence de temps d'arrivée.

24. Dispositif de réseau selon la revendication 23, dans lequel ledit calculateur de localisation (23) est agencé pour réaliser une moyenne desdites valeurs de différence de temps d'arrivée.

25. Dispositif de réseau selon l'une quelconque des revendications 21 à 24, comprenant en outre des moyens formant unité de commande (27) destinés à recevoir des informations de canal contenues dans ladite requête de localisation reçue et destinés à ajuster lesdits moyens de réception (51-53) en fonction desdites informations de canal.

26. Dispositif de réseau selon l'une quelconque des revendications 21 à 25, dans lequel ledit dispositif de réseau est une unité de mesure de localisation locale (20) connectée à une station d'émetteur/récepteur de base d'un réseau cellulaire.

27. Dispositif de réseau selon l'une quelconque des revendications 21 à 26, dans lequel lesdites au moins deux unités de mesure sont des moyens formant antenne (41-43 ; 410-440) ou des unités de mesure (201A-201F).

28. Dispositif de réseau selon la revendication 27, dans lequel lesdits moyens formant antenne (41-43 ; 420-440) sont des antennes de station d'émetteur/récepteur de base.

29. Dispositif de réseau selon l'une quelconque des revendications 21 à 28, dans lequel ledit dispositif de réseau est un calculateur de localisation intérieure de service (200) agencé pour réaliser un calcul de position en fonction de signaux de mesure de phase et/ou de force reçus en provenance d'au moins deux unités de mesure intérieures (201A-201F) et en fonction d'informations de localisation indiquant la localisation desdites au moins deux unités de mesure intérieures (201A-201F) à l'intérieur d'un immeuble.

30. Dispositif de réseau selon la revendication 29, dans lequel ledit calculateur de localisation intérieure de service (200) est agencé pour synchroniser lesdites au moins deux unités de mesure intérieures (201A-201F) par l'intermédiaire d'une connexion de données.

31. Dispositif de réseau selon les revendications 29 ou 30, dans lequel ladite connexion de données est une connexion LAN, WAN ou WLAN.

32. Dispositif de réseau destiné à fournir une estimation de localisation d'un dispositif de terminal sans fil (10) à un réseau cellulaire, dans lequel ledit dispositif de réseau (90) est agencé pour déterminer une unité de détermination locale (20 ; 200), pour émettre une requête de localisation vers ladite unité de détermination locale (20 ; 200), lorsqu'une requête de localisation dudit dispositif de terminal sans fil (10) a été reçue en provenance dudit réseau cellulaire, et pour fournir une estimation de localisation dudit dispositif de terminal sans fil (10) au dit réseau cellulaire en fonction d'informations de localisation reçues en provenance de ladite unité de détermination locale (20 ; 200) en réponse à ladite requête de localisation.

33. Dispositif de réseau selon la revendication 32, dans lequel ledit dispositif de réseau est un centre de localisation mobile de service (90).

34. Dispositif de réseau selon la revendication 32 ou 33, dans lequel lesdites informations de localisation sont des informations de différence de temps d'arrivée ou ladite estimation de localisation.

35. Unité de mesure pour un système de localisation intérieur d'un réseau cellulaire, ladite unité de mesure (201A-201F) comprenant :
a) des moyens de réception (203) destinés à recevoir un signal émis depuis un dispositif de terminal sans fil (10) par l'intermédiaire d'au moins deux moyens formant antenne (202) agencés à une distance prédéterminée l'un de l'autre ;
b) des moyens de mesure (210, 211) destinés à mesurer des valeurs de phase et/ou de force de signaux obtenus en provenance desdits deux moyens formant antenne (202) ; et
c) des moyens de traitement (209) destinés à évaluer la qualité desdites valeurs de phase et/ou de force mesurées desdits signaux reçus et destinés à fournir lesdites valeurs de phase et/ou de force mesurées à une unité de détermination de localisation locale (200) en fonction de ladite qualité évaluée.

36. Unité de mesure selon la revendication 35, dans laquelle ladite distance prédéterminée correspond à environ la moitié de la longueur d'onde dudit signal reçu.

37. Unité de mesure selon la revendication 35 ou 36, dans laquelle lesdits moyens de mesure comprennent des premiers moyens de mesure (211) destinés à obtenir une valeur RSSI et des deuxièmes moyens de mesure (210) destinés à obtenir des informations d'angle d'arrivée.

38. Unité de mesure selon l'une quelconque des revendications 35 à 37, dans laquelle ladite unité de mesure (201A-201F) est agencée pour émettre des informations de statut et/ou de version vers ladite unité de détermination de localisation locale (200) en réponse à une requête correspondante.

39. Unité de mesure selon l'une quelconque des revendications 35 à 38, dans laquelle une séquence de désétalement est téléchargée en provenance dudit réseau cellulaire vers ladite unité de mesure (20 1 A-20 1 F).

40. Unité de mesure selon l'une quelconque des revendications 35 à 39, dans laquelle lesdits moyens de traitement (209) sont agencés pour envoyer des données à ladite unité de détermination de localisation locale (200) par l'intermédiaire d'une connexion de données.

41. Unité de mesure selon l'une quelconque des revendications 35 à 40, dans laquelle lesdits moyens de mesure (210, 211) sont agencés pour réaliser ladite mesure plusieurs fois dans un intervalle de temps dudit signal reçu.
